# EUROPÄISCHE PATENTSCHRIFT

(11) **EP 0 889 563 B1**
(45) Veröffentlichungstag und Bekanntmachung des Hinweises auf die Patenterteilung: **15.12.2004**
(21) Anmeldenummer: 98117659.7
(22) Anmeldetag: 17.09.1998
(51) Int. Cl.: H01S 3/23, H01S 3/06, H01S 3/0941

(54) **Quantenoptische Verstärker für optische Freiraum-Kommunikationssysteme**
Quantum optical amplifier for free space optical communication systems
Amplificateur quantum optique pour systèmes de communication optique en espace libre

(30) Priorität: 03.03.1998 CH 49898
(43) Veröffentlichungstag der Anmeldung: 07.01.1999
(73) Patentinhaber: Contraves Space AG, 8052 Zürich (CH)
(72) Erfinder: Balmer, Jürg, Prof. Dr. Sc. nat., 2503 Biel (CH); Graf, Thomas, Dr. Sc. nat., 3012 Bern (CH); Mayor, Jean-Michel, Dipl. Phys. Ing. EPFL, 1400 Yverdon-les-Bains (CH)
(74) Vertreter: OK pat AG

(56) Entgegenhaltungen:
- EP-A- 0 821 453
- US-A- 5 249 196
- US-A- 5 268 787

## Beschreibung

Die vorliegende Erfindung betrifft Vorrichtungen zur quantenoptischen Verstärkung modulierten Lichts insbesondere in optischen Freiraum-Kommunikationssystemen.

Die optische Freiraum-Kommunikation zwischen Satelliten sowie zwischen Satellit und Bodenstation wird in naher Zukunft eine wichtige und an Bord der Satelliten eine gewichtssparende Ergänzung zur bestehenden Mikrowellentechnik darstellen. Sogenannte optische Terminals bestehen aus einem oder mehreren Teleskopen, welche den Winkelbereich des Gesichtsfeldes eines optischen Empfängers in Richtung einer Gegenstation einschränken sowie für eine gerichtete Abstrahlung der zu sendenden Signale sorgen. Weiterhin sind mehrere bewegliche Spiegel vorhanden, durch welche die Ausrichtung von Sende- und Empfangsrichtung vorgenommen wird. Neben der direkten Detektion der optischen Leistung des Senders der Gegenstation als Übertragungsverfahren spielt auch die kohärente Überlagerung des empfangenenen Lichts mit dem gleichfrequenten Licht eines Lokaloszillator-Lasers eine bedeutende Rolle, da neben einer grossen Empfindlichkeit für das zu detektierende Signal die Unempfindlichkeit für Störungen durch im Hintergrund vorhandene Strahlung ins Gewicht fällt.

Die durch ihre extensive Anwendung in der faseroptischen Kommunikation einen hohen Entwicklungsstand erreicht habenden Diodenlaser wiederum stellen zumindest für einfache mit Intensitätsmodulation arbeitende Systeme eine zudem noch Platz und Gewicht sparende Alternative dar, eignen sich aber trotz des inzwischen auch hier erreichten Betriebs auf nur einer optischen Frequenz im allgemeinen noch nicht für kohärente Übertragungsverfahren, abgesehen von komplizierten Konstruktionen mit grossen angekoppelten zusätzlichen Resonatoren. Ein Grund liegt in der noch zu grossen spektralen Breite dieser einen abgestrahlten optischen Frequenz. Zwar arbeiten faseroptische kohärente Übertragungssysteme auch mit handelsüblichen Diodenlasern, wobei aber aufgrund leitungsgebundener Übertragung bei relativ hoher optischer Leistung detektiert wird.

Die bei Freiraumübertragung vorhandene störende Hintergrundstrahlung sowie die meistens sehr geringe Leistung des empfangenen Signals erfordern jedoch eine optische Bandbreite des unmodulierten Signals, die wesentlich niedriger ist als die Modulationsbandbreite. Dies ist ein Kriterium, das zusammen mit geringer Grösse und niedrigem Gewicht am besten durch diodenlasergepumpte Festkörperlaser erfüllt werden kann. Bestehende Ansätze, die zum Betrieb notwendigen Lasersysteme in ein Terminal zur optischen Freiraum-Kommunikation zu integrieren, sind von Carlson et al. sowie Marshalek et al. beschrieben (R.T.Carlson et al., Monolithic glass block lasercom terminal: hardware proof of concept and test results, SPIE vol. 2381, Free-space laser communication technologies VII, 7-8 Febr, 1995, San Jose, California, p. 90-102; R. G. Marhsalek et al., Lightweight, high- data-rate laser communications terminal for low-Earth-orbit satellite constellations, SPIE vol. 2381, Free-space laser communication technologies VII, 7-8 Febr, 1995, San Jose, California, p. 72-82).

Beide Autorengruppen beschreiben Lasersysteme, die mechanisch an die Optik eines Terminals angekoppelt sind und ihre Lichtemission über kollimierte Strahlen in die Optik führen. Allerdings sind hierbei dem Stand der Technik entsprechend Diodenlaser zur Anwendung gekommen.

US 5 268 787 A beschreibt die quantenoptische Verstärkung von polarisierten Lichtsignalen.

Diodenlasergepumpte Festkörperlaser weisen ein grösseres Volumen und eine geringere Effizienz auf, erzeugen also ein grösseres Mass an Abwärme als vergleichbare Diodenlaser. Das höhere Mass an in der Nähe des optischen Systems produzierter Wärme erweist sich als Risiko für den störungsfreien Betrieb der Optik.

Ein weiteres Problem stellt die mangelhafte Modulierbarkeit von diodengepumpten Festkörperlasern dar. Im Unterschied zu Diodenlasern verharrt das die optische Verstärkung erzeugende Medium nach Zufuhr von Pumpenergie relativ lange in einem angeregten Zustand. Weiterhin ist der Resonator solcher Laser wesentlich grösser als der von Diodenlasem. Folglich sind z.B. für Amplitudenmodulation Grenzfrequenzen von etwa 100 kHz die Regel. Die deshalb nötige externe Modulation ist auch recht schwierig zu vollführen, da eine hohe optische Leistung handzuhaben ist, was den Einsatz elektrooptischer Modulatoren mit niedrigerer Grenzfrequenz bedingt.

Die externe Modulation von Laserlicht kann mit einer hohen Grenzfrequenz in Modulatoren vorgenommen werden, in welchen das Licht in einem Wellenleiter geführt wird, der einen geringen gegenseitigen Abstand der die modulierende Spannung führenden Elektroden und somit eine geringere Modulationsspannung erlaubt. Da dieses Verfahren wegen der durch den geringen Querschnitt des optischen Wellenleiters bedingten starken Überhöhung der optischen Intensität nur niedrige optische Leistungen zulässt, muss das modulierte optische Signal nachverstärkt werden. Ansätze hierzu bestehen in der Übernahme von inzwischen in der fasergebundenen optischen Kommunikation bewährten Verfahren und Vorrichtungen, z. B. durch Nachverstärkung des modulierten optischen Signals mittels eines Erbium dotierten Faserverstärkers (T. Araki, M. Yajima, S. Nakamori, Y. Hisada, Laser transmitter systems for high - data - rate optical inter - orbit communications, SPIE vol. 2381, Free-space laser communication technologies VII, 7-8 Febr, 1995, San Jose, California, p. 264 - 272).

Neben Diodenlaser-gepumpten Festkörperlasern finden auch entsprechende Wanderwellen-Verstärker Verwendung, womit speziell zur Nachverstärkung von Licht aus mit derselben Technologie arbeitenden Lasern geeignete Vorrichtungen zur Verfügung stehen, besonders für die wegen ihrer geringen spektralen Breite für die optische Freiraum - Kommunikation sehr nützlichen Diodenlaser - gepumpten Neodym-YAG-Festkörperlaser. Das zu verstärkende Licht wird in einen verstärkenden Kristall geführt, in welchem die Photonen des Lichtstrahls mit einer gewissen Wahrscheinlichkeit auf Atome stossen, sie sich in einem optisch angeregten, aber durch besondere Eigenschaften des Materials dennoch zeitlich verhältnismässig stabilen Zustand befinden. Die relative Stabilität dieses Zustands wird nur durch ein Photon gestört, welches dieselbe Energie aufweist wie die Differenz zwischen angeregtem Zustand und unterem Laserniveau des Atoms, wobei das entsprechende Atom ein zusätzliches Photon derselben Energie, d.h. derselben Wellenlänge, und Phase freigibt.

Der angeregte Zustand der Atome wird durch sogenanntes Pumplicht hergestellt, welches im allgemeinen eine kürzere Wellenlänge als das zu verstärkende Licht aufweist und die Atome in einen der Energie seiner Photonen entsprechenden angeregten Zustand versetzt, aus welchem dieselben spontan in einen relativ stabilen Zustand übergehen, dessen Energiedifferenz zum nicht angeregten unteren Laserniveau der Energie der Photonen des zu verstärkenden Lichts entspricht. Eine hohe Verstärkung von Licht wird erzielt, wenn die Photonen des zu verstärkenden Lichts beim Durchgang durch das verstärkende Medium auf viele angeregte Atome stossen. Folglich muss die Volumendichte angeregter Atome hoch sein. Da aber ein gewisser Anteil der angeregten Atome je Zeiteinheit infolge einer endlichen mittleren Lebensdauer des angeregten Zustands spontan in das untere Laserniveau übergeht, das dabei emittierte Photon aber für die Verstärkung des eingekoppelten Lichts verlorengeht, muss bei einer hohen Volumendichte angeregter Atome auch bei fehlendem zu verstärkendem Licht ständig Pumplicht mit hoher Leistung in das Medium eingestrahlt werden, um die hohe Volumendichte angeregter Atome zu erhalten, wodurch daher bei niedriger Intensität und daher hohen Verstärkungsfaktoren solcher Vorrichtungen auch deren Wirkungsgrad extrem schlecht ist. Sehr niedrige Verstärkungsfaktoren sind zu beobachten, wenn das zu verstärkende Licht bereits eine hohe Intensität aufweist, d. h. wenn eine grosse mittlere Rate von Photonen das verstärkende Medium passiert und die Dichte angeregter Atome infolge einer hohen Rate stimulierter Emissionen von zusätzlichen Photonen niedrig ist.

Jedes durch ein Pumplicht-Photon angeregte Atom wird bereits nach im Mittel kurzer Zeit durch ein Photon des zu verstärkenden Lichts in das untere Laserniveau versetzt. Bei verhältnismässig langer mittlerer Lebensdauer der angeregten Atome besteht eine verhältnismässig geringe Wahrscheinlichkeit eines spontanen und somit nutzlosen Übergangs in das untere Laserniveau, wodurch der Wirkungsgrad bei hoher Intensität und somit geringer Verstärkung hoch ist.

Um eine hohe Verstärkung bei gleichzeitig hoher Rate stimulierter Übergänge in das untere Laserniveau zu erzielen, muss trotz niedriger Dichte angeregter Atome innerhalb des verstärkenden Mediums eine hohe mittlere Zahl zusätzlicher, durch stimulierte Übergänge angeregter Atome in das untere Laserniveau erzeugter Photonen gewährleistet sein. Dies wird meistens dadurch erzielt, dass das zu verstärkende Licht auf möglichst vielen Wegen durch die durch Pumplicht bestrahlte Zone eines verstärkenden Mediums geleitet wird. Hierdurch besteht bei jeweils konstanter Volumendichte angereger Atome für jedes eingekoppelte Photon des zu verstärkenden Lichts ein der Anzahl der Durchgänge entsprechendes Vielfaches der Wahrscheinlichkeit eines einzelnen Durchgangs, zusätzliche Photonen zu generieren.

Trotz niedriger Pumpleistung kann somit ein vergleichsweise hoher Verstärkungsfaktor erzielt werden. Allerdings sind die dem Stand der Technik entsprechenden Vorrichtungen aus mehreren viel Raum und Masse beanspruchenden Elementen aufgebaut, die dadurch Raumfahrt - spezifischen Anforderungen nur schlecht genügen. Auch spezielle Entwicklungen bergen das Risiko ungenügender mechanischer Belastbarkeit (T. J. Kane, E. A. P. Cheng, B. Nguyen, Diode - pumped ND:YAG amplifier with 52 - dB gain, SPIE vol. 2381, Free-space laser communication technologies VII, 7-8 Febr, 1995, San Jose, California, p. 273 - 284; T. E. Olson, T. J. Kane, W. M. Grossmann, H. Plaessmann, Multipass diode - pumped ND:YAG optical amplifiers at 1.06 mu m and 1.32 mu m, Optics Letters, Vol. 6, No. 5, May 1994, p. 605 - 608).

Ein zusätzliches Problem für Raumfahrt-Anwendungen besteht darin, dass auch die zur Erzeugung des Pumplichts verwendeten Diodenlaser eine begrenzte Lebensdauer aufweisen. Folglich ist es notwendig, für jeden Diodenlaser - gepumpten Festkörperlaser und jeden Diodenlaser - gepumpten optischen Verstärker mehrere Diodenlaser in Redundanz bereitzuhalten, um Ausfälle ersetzen zu können.
Redundant vorhandene Diodenlaser erfordern aber optische Vorrichtungen, die das Umschalten zwischen den von den einzelnen Laserdioden emittierten Lichtstrahlen erlauben.

Folglich ist es Aufgabe der nachfolgend beschriebenen Erfindung, die Nachteile des Standes der Technik zu vermeiden und Licht quantenoptisch bei hoher Verstärkung und Effizienz unter Verwendung vielfach redundanter Pumplichtquellen zu verstärken.

Gewöhnlich wird das Licht eines mit niedriger optischer Leistung arbeitenden Diodenlaser-gepumpten Festkörper-Lasers nach Passieren eines optischen lsolators in einen Wellenleiter-Modulator gekoppelt, um mit einem breitbandigen Nachrichtensignal in seiner Phase moduliert zu werden. Anschliessend erfolgt die optische Nachverstärkung des modulierten Signals, welche entweder in einem Diodenlaser - gepumpten Verstärker oder in einer dotierten optischen Faser geschieht. Das Grundelement eines erfindungsgemässen Diodenlaser - gepumpten Verstärkers besteht aus einem Lasermedium entsprechender Geometrie (im folgenden als Kristall bezeichnet), dessen Volumen je entlang zweier Strahlen von Diodenlasern mit Pumplicht durchflutet wird. Das zu verstärkende Licht wird derart in den Kristall eingekoppelt, dass es durch die Reflexion an mehreren reflektierenden Schichten, welche entweder auf den Seitenflächen des Kristalls direkt angebracht sind oder sich auf vom Kristall abgewandten Seiten von Viertelwellenplatten befinden, die jeweils in unmittelbarer Nähe einer Fläche des Kristalls angeordnet sind, sich entlang von Pumplicht durchfluteten strahlenförmigen Zonen mehrfach durch den Kristall bewegt, bevor es den Kristall verstärkt verlässt.

Eine Weiterbildung dieses Konzeptes, wie es in Anspruch 1 definiert ist, beihhaltet ein verstärkendes Medium, das aus zwei durch eine polarisationsselektive Schicht getrennten Kristallen besteht, wodurch das zu verstärkende Licht die von Pumplicht durchfluteten Zonen eines Kristalls 8-fach, sowie des anderen Kristalls 2-fach durchläuft. Hierbei werden zwei Viertelwellenplatten mit an der dem Kristall abgewandten Seite integriertem Spiegel sowie ein Spiegel verwendet.

Beide Verstärker werden durch Diodenlaser mit Pumplicht versorgt. Das Pumplicht kann von mehreren redundant vorhandenen Diodenlasern in eine mehrmodige optische Faser geführt werden, deren Ausgang dann über eine strahlformende Optik in den Kristall eines Verstärkers führt.

In Fortführung der beschriebenen Weiterbildung werden weitere Kristalle mit jeweils zwei entsprechend ausgeführten Viertelwellenplatten sowie jeweils einer zusätzlichen polarisationsselektiven Schicht zwischen die Kristalle des quantenoptischen Verstärkers nach der beschriebenen Weiterbildung eingefügt, wobei durch die Viertelwellenplatten und deren wellenlängenselektiv wirkenden Spiegel hindurch Pumplicht zugeführt wird. Hierbei wird die Anzahl der vom zu verstärkenden Licht durchlaufenen optisch gepumpten Zonen um jeweils 2 erhöht.

Diese Vorrichtung beinhaltet den Vorteil, durch eine sehr hohe Anzahl von Durchgängen des zu verstärkenden Lichts durch optisch gepumpte Zonen eine hohe Verstärkung zu gewährleisten, wobei die Konstruktion des quantenoptischen Verstärkers von besonderer mechanischer Festigkeit ist, Masse und räumliche Ausdehnung hingegen vergleichsweise gering sind. Ein weiterer Vorteil im Zusammenhang mit 4-Niveau-Systemen zur quantenoptischen Verstärkung ist die Tatsache, dass der Ausfall oder Abfall von optischer Pumpleistung in einer der optisch gepumpten Zonen keine Absorption von zu verstärkendem Licht durch das Medium bewirkt. Redundant ausgeführte Pumplichtquellen können also an verschiedenen Stellen eines Kristalls zur Erzeugung einer optisch gepumpten Zone bereitgehalten werden, wodurch sich die Verwendung spezieller mechanisch betätigter optischer Umschaltvorrichtungen zur Erfassung verschiedener Pumplichtquellen für eine einzelne optisch gepumpte Zone erübrigt.

Weitere Einzelheiten, Merkmale und Vorteile der Erfindung ergeben sich nicht nur aus den Ansprüchen 1-8 und diesen zu entnehmenden Merkmalen -für sich und/oder in Kombination, sondern auch aus der nachfolgenden Beschreibung bevorzugter Ausführungsbeispiele.

Es zeigen:
- **Fig. 1**: einen aus einem einzigen Kristall bestehenden quantenoptischen Verstärker, der als Beispiel zum besseren Verständnis der Erfindung dient,
- **Fig. 2**: einen aus zwei Kristallen bestehenden erfindungsgemässen quantenoptischen Verstärker,
- **Fig. 3**: einen aus zwei Kristallen bestehenden erfindungsgemässen quantenoptischen Verstärker ohne Faraday-Rotator,
- **Fig. 4**: einen aus drei Kristallen bestehenden erfindungsgemässen quantenoptischen Verstärker,
- **Fig. 5**: einen aus drei Kristallen bestehenden erfindungsgemässen quantenoptischen Verstärker ohne Faraday-Rotator,
- **Fig. 6**: eine Variante eines weiteren aus zwei Kristallen bestehende erfindungsgemässen quantenoptischen Verstärkers.

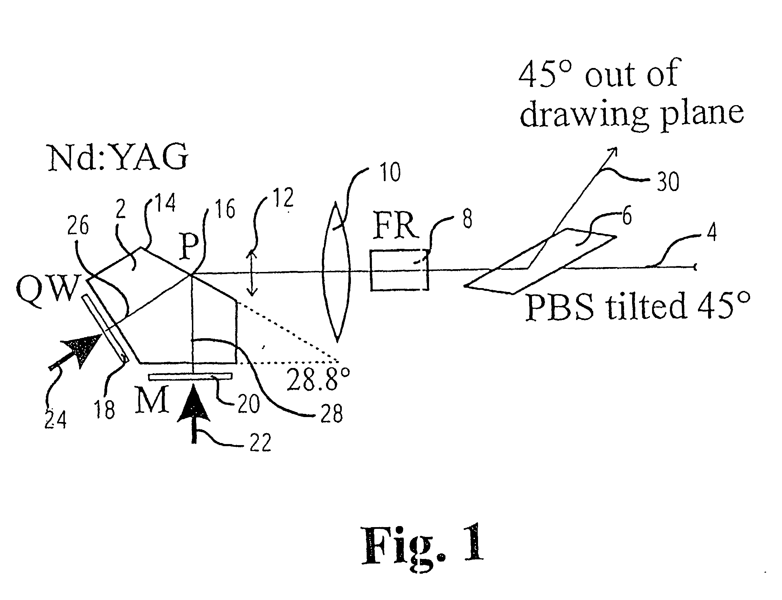

**Fig. 1** zeigt an einem Beispiel einen in Form eines einzigen Kristalls **2** ausgeführten quantenoptischen Verstärker. Ein Lichtstrahl **4** durchstrahlt einen Polarisationsstrahlteiler **6**. Nach der anschliessenden Durchstrahlung eines Faraday - Rotators **8** ist die Polarisation des Lichtstrahls **4** um 45 Grad gedreht. Der Lichtstrahl **4** wird, wie durch ein Symbol **12** angedeutet, in mit der Zeichenebene zusammenfallender Polarisation, durch eine Linse **10**, welche zur Kompensation des thermischen Linseneffekts eingefügt ist, an einen Punkt **16** einer polarisationsselektiven Schicht **14** des Kristalls **2** geführt. Um diese Bedingung sowohl für die Schicht **14** des Kristalls **2** als auch den Polarisationsstrahlteiler **6** zu erfüllen, ist der Polarisationsstrahlteiler **6** als gegenüber der Zeichenebene um 45 Grad gedreht zu denken. Der in den Kristall **2** eingekoppelte Lichtstrahl **4** breitet sich nach Passieren des Punkts **16** durch den optisch dichteren Kristall **2** als Medium entlang einer Linie **26** in Richtung einer Viertelwellenplatte **24** aus, die unmittelbar an die entsprechende Oberfläche des Kristalls **2** gefügt ist. Die dem Kristall abgewandte Seite der Viertelwellenplatte **24** ist derart beschichtet, dass Licht der Wellenlänge des Lichtstrahls **4** möglichst vollständig in die entgegengesetzte Richtung reflektiert wird. Ein Pumplichtstrahl **24** hingegen kann die Viertelwellenplatte **24** mit möglichst geringen Verlusten passieren. Der Pumplichtstrahl **24** erzeugt durch optische Anregung einer sich mit derjenigen des Lichtstrahls **4** möglichst gut überlappenden Zone des Kristalls **2** optische Verstärkung des Lichtrahls **4**.

Die Richtung der Polarisation des sich in den Kristall **2** zurückbewegenden Lichtstrahls **4** ist nun infolge des Doppeldurchganges durch die Viertelwellenplatte orthogonal in Bezug auf die Richtung der Polarisation des am Punkt **16** der Fläche **14** in Richtung der Viertelwellenplatte **18** in das Kristall gebrochenen Lichtstrahls **4**. Entlang der Linie **26** pflanzt sich der Lichtstrahl **4** nun im Kristall **2** in Richtung der polarisationsselektiv reflektierend wirkenden Fläche **14** fort, um am Punkt **16** in Richtung eines Spiegels **20** reflektiert zu werden. Der Spiegel **20** reflektiert einen möglichst hohen Anteil des sich entlang einer Linie **28** zu ihm fortplanzenden Lichtstrahls **4** in die entgegengesetzte Richtung. Ein weiterer Pumplichtstrahl **22** wird durch den wellenlängenselektiv ausgeführten Spiegel **20** hindurch zu einem möglichst grossen Teil in den Kristall **2** geführt, um den Kristall **2** entlang der Linie **28** optisch zu pumpen. Nach seiner Reflexion am Spiegel **20** pflanzt sich der in seiner Polarisation unveränderte Lichtstrahl **4** entlang der Linie **28** in Richtung des Punktes **16** fort, um an der Fläche **14** ein weiteres Mal reflektiert zu werden und sich entlang der Linie **26** in Richtung der Viertelwellenplatte **18** fortzupflanzen. Die Polarisationsrichtung dieses Lichtstrahls ist nun orthogonal zum am Punkt **16** in den Kristall gebrochenen Lichtstrahl **4**. Nach abermaliger Reflexion an der dem Kristall **2** abgewandten Seite der Viertelwellenplatte **18** und deren Durchquerung breitet sich der Lichtstrahl **4** wieder in Richtung des Punktes **16** aus, wobei dessen Polarisation orthogonal zu derjenigen des erstmals in der Viertelwellenplatte **18** reflektierten Lichtstrahls **4** ist. Deshalb erfolgt am Punkt **16** dessen reflexionsfreie Brechung in Richtung der Linse **10**, die Durchstrahlung des Faraday-Rotators **8**, sowie die Reflexion des nun orthogonal zum einlaufenden Lichtstrahl polarisierten Lichtstrahls **4** am Polarisationstrahlteiler **6** in Richtung einer Linie **30**. Insgesamt passiert der Lichtstrahl **4** 6-fach optisch gepumpte Zonen des Kristalls **2**. Entlang der Linie **26** durchläuft der Lichtstrahl **4** 4-fach die entsprechende optisch gepumpte Zone, wobei jede Ausbreitungsrichtung und jeweils beide zueinander orthogonalen Polarisationen genutzt werden. Entlang der Linie **28** wird die entsprechende optisch gepumpte Zone in beiden einander entgegengesetzten Ausbreitungsrichtungen in derselben linearen Polarisation durchstrahlt.

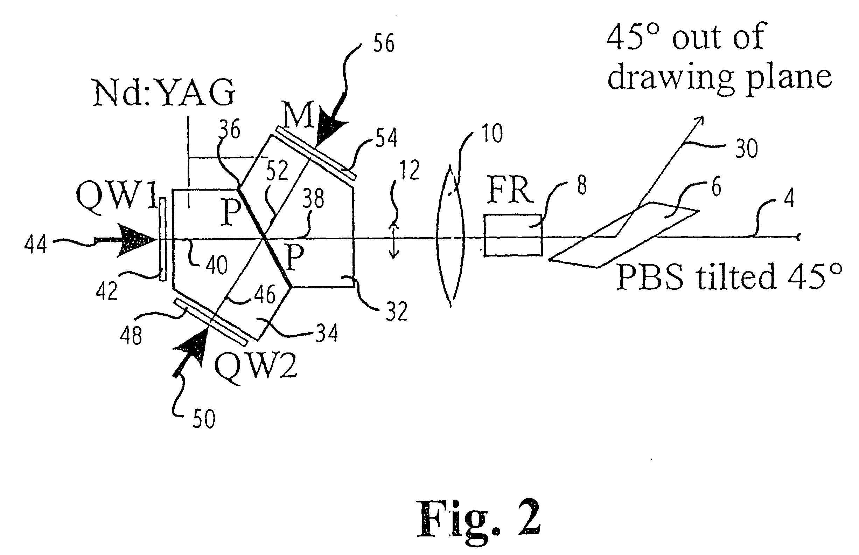

Eine höhere Anzahl von optisch gepumpten Zonen durchläuft der Lichtstrahl **4** in einer Vorrichtung nach **Fig. 2**. Wie in der Vorrichtung nach **Fig. 1** passiert der Lichtstrahl **4** zunächst den Polarisationsstrahlteiler **6**, den Faraday-Rotator **8** und die Linse **10**, um in der durch das Symbol **12** dargestellten Polarisation in einen ersten Kristall **32** zu strahlen. Nach Fortpflanzung entlang einer Linie **38** gelangt der Lichtstrahl **4** durch eine polarisationsselektiv reflektierende Schicht **36** in einen weiteren Kristall **34** und pflanzt sich in diesem entlang einer Linie **40** in Richtung einer Viertelwellenplatte **42** fort, die in ihrer Ausführungsform der Viertelwellenplatte **18** nach **Fig. 1** entspricht. Ebenso entspricht die Ausführungsform einer Pumplichtquelle **44** derjenigen der Pumplichtquelle **24** nach **Fig. 1**. Nach der Reflexion des sich entlang der Linien **38** und **40** in Richtung der Viertelwellenplatte **42** fortgepflanzt habenden Lichtstrahls **4** in der Viertelwellenplatte **42** breitet sich der Lichtstrahl **4** in umgekehrter Richtung und in seiner Polarisation um 90 Grad gedreht entlang der Linie **40** aus, um an der polarisationsselektiv reflektierenden Schicht **36** in Richtung einer weiteren, der Viertelwellenplatte **18** in **Fig. 1** entsprechenden Ausführungsform gleichenden Viertelwellenplatte **48** reflektiert zu werden. Ebenso entspricht eine Pumplichtquelle **50** allen vorab beschriebenen Ausführungsformen von Pumplichtquellen. Nach Reflexion in der Viertelwellenplatte **48** pflanzt sich der Lichtstrahl **4** entlang der Linie **46** mit wiederum um 90 Grad gedrehter Polarisation von der Viertelwellenplatte **48** zur polarisationsselektiv reflektierenden Schicht **36** fort, um durch diese hindurch in das Kristall **32** zu gelangen und sich entlang der Linie **52** in Richtung eines Spiegels **54** fortzupflanzen. Der Spiegel **54** entspricht in seiner Ausführungsform dem Spiegel **20** in **Fig. 1,** ebenso entspricht eine Pumplichtquelle **56** vorangegangenen Ausführungsformen. Nach Reflexion am Spiegel **54** durchläuft der Lichtstrahl **4** in umgekehrter Richtung abermals die Kristalle **32** und **34**, ohne an der Schicht **36** reflektiert zu werden. Nach einer weiteren Reflexion in der Viertelwellenplatte **48** breitet sich der Lichtstrahl **4** im Kristall **34** entlang der Linien **46** und **40** in Richtung der Viertelwellenplatte **42** aus, wobei infolge der nun bei der Reflexion in der Viertelwellenplatte **48** erfolgten Drehung der Polarisation des Lichtstrahls **4** um 90 Grad dieser an der Schicht **36** reflektiert wird. Eine nun folgende Reflexion des Lichtstrahls **4** in der Viertelwellenplatte **42** bewirkt, dass der nun wiederum in seiner Polarisation um 90 Grad gedrehte Lichtstrahl **4** die Kristalle **34** und **32** entlang der Linien **40** und **38** durchquert, ohne an der Schicht **36** reflektiert zu werden. Die Abtrennung des den Kristall **32** verlassenden Lichtstrahls **4** erfolgt in der anhand von **Fig. 1** erläuterten Weise. In dieser Ausführungsform durchläuft der Lichtstrahl **4** insgesamt 10-mal optisch gepumpte Zonen. Entlang der Linie **40** sowie der Linie **46** innerhalb des Kristalls **34** erfolgen jeweils 4-fache Durchgänge in beiden möglichen Richtungen und Polarisationen. Entlang der Linie **52** im Kristall **32** erfolgt ein 2-facher Durchgang in beiden möglichen Richtungen in der durch das Symbol **12** dargestellten Polarisation.

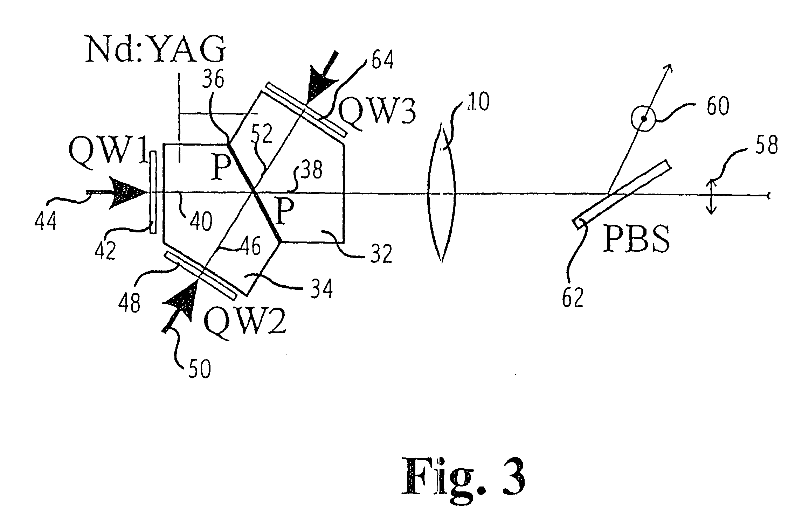

Der Ersatz des Spiegels **54** in der Ausführungsform nach **Fig. 2** ergibt eine weitere Ausführungsform nach **Fig. 3**, in welcher ein optischer Isolator zur Trennung von in die Vorrichtung ein- und aus dieser herauslaufenden Lichtstrahlen **4** nicht benötigt wird, was zu erheblicher Einsparung an Masse und Volumen führt.

In der in **Fig. 3** dargestellten Ausführungsform durchstrahlt der Lichtstrahl **4** in einer durch ein Symbol **58** dargestellten Polarisation einen Polarisationstrahlteiler **62**, die Linse **10** und die Kristalle **32** sowie **34** entlang der Linien **38** und **40**, ohne an der polarisationsselektiv reflektierenden Schicht **36** reflektiert zu werden. Anschliessend erfolgt die Reflexion in der Viertelwellenplatte **42**, wodurch sich der Lichtstrahl **4** entlang der Linie **40** mit um 90 Grad gedrehter Polarisation in entgegengesetzter Richtung fortpflanzt, um an der polarisationsselektiv reflektierenden Schicht **36** in Richtung der Viertelwellenplatte **48** reflektiert zu werden. Nach Ausbreitung entlang der Linie **46** wird dieser in der Viertelwellenplatte **48** reflektiert und pflanzt sich mit um 90 Grad gedrehter Polarisation entlang der Linie **46** in entgegengesetzter Richtung fort. Der Lichtstrahl **4** tritt ohne Reflexion an der Schicht **36** in das Kristall **32** über, um sich entlang der Linie **52** in Richtung einer Viertelwellenplatte **64** fortzupflanzen, die in ihrer Ausführungsform den Viertelwellenplatten **42** und **48** entspricht. Nach der Reflexion in der Viertelwellenplatte **64** pflanzt sich der Lichtstrahl **4** mit um 90 Grad gedrehter Polarisation in entgegengesetzter Richtung entlang der Linie **52** fort, um an der polarisationsselektiv reflektierenden Schicht **36** in Richtung der Linie **38** reflektiert zu werden, auf welcher dieser den Kristall **32** verlässt, um nach Passieren der Linse **10** mittels des Polarisationsstrahlteilers **62** in Richtung der Linie **30** reflektiert zu werden. Der den Kristall **32** verlassende Lichtstrahl **4** besitzt eine durch ein Symbol **60** dargestellte Polarisation. In dieser Ausführungsform durchläuft der Lichtstrahl **4** 6-fach optisch gepumpte Zonen in den beiden Kristallen **32** und **34**, es werden die entlang der Linien **40**, **46** und **52** den Viertelwellenplatten **42, 48** und **64** vorgelagerten optisch gepumpten Zonen in jeweils beiden möglichen Richtungen in jeweils zueinander orthogonaler Polarisation durchlaufen.

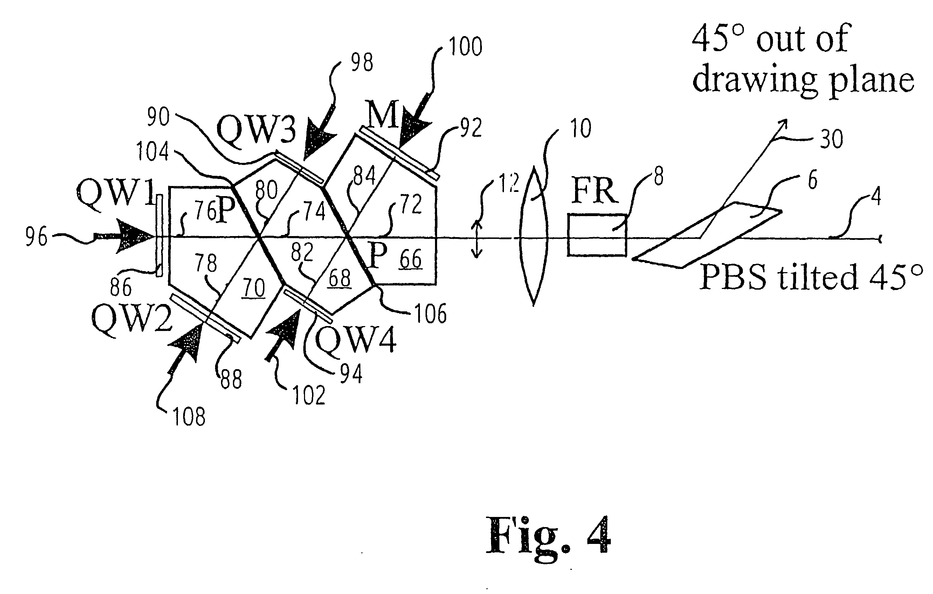

Eine weitere der Erhöhung der Anzahl von Durchgängen des Lichtstrahls **4** durch optisch gepumpte Zonen ist mittels einer Vorrichtung nach **Fig. 4** erzielbar. Der Lichtstrahl **4** durchläuft nach dem Polarisationsstrahlteiler **6**, dem Faraday-Rotator **8** sowie der Linse **10** in einer durch das Symbol **12** dargestellten Polarisation zunächst entlang von einer Linie **72**, einer Linie **74** und einer Linie **76** einen Kristall **66**, einen Kristall **68** sowie einen Kristall **70**, ohne an einer polarisationsselektiv reflektierenden Schicht **106** und einer weiteren polarisationsselektiv reflektierenden Schicht **104** reflektiert zu werden. Nach Reflexion in einer Viertelwellenplatte **86** pflanzt sich der Lichtstrahl **4** mit um 90 Grad gedrehter Polarisation in umgekehrter Richtung entlang der Linie **76** fort, um an der polarisationsselektiv reflektierenden Schicht **104** in Richtung einer Linie **78** reflektiert zu werden. Nach Reflexion in einer weiteren Viertelwellenplatte **88** pflanzt sich der Lichtstrahl **4** in umgekehrter Richtung mit wiederum um 90 Grad gedrehter Polarisation in Richtung der Linie **78** sowie einer Linie **80** fort, wobei ein reflexionsfreier Übergang vom Kristall **70** in den Kristall **68** erfolgt. Nach Reflexion in einer Viertelwellenplatte **90** pflanzt sich der Lichtstrahl **4** in umgekehrter Richtung mit um 90 Grad gedrehter Polarisation entlang der Linie **80** fort, um an der polarisationsselektiven Schicht **104** in den durch die Linie **74** bestimmten Ausbreitungspfad reflektiert zu werden. Anschliessend erfolgt eine weitere Reflexion an der polarisationsselektiv reflektierenden Schicht **106** in Richtung der Linie **82**, worauf der Lichtstrahl **4** in einer weiteren Viertelwellenplatte **94** in die entgegengesetzte Richtung reflektiert und in seiner Polarisation wiederum um 90 Grad gedreht wird. Entlang einer Linie **82** und einer Linie **84** breitet sich der Lichtstrahl **4** dann in Richtung eines Spiegels **92** aus. an welchem dieser ohne Drehung seiner Polarisation in die entgegengesetzte Richtung reflektiert wird. Nachdem der Lichtstrahl **4** daraufhin die polarisationsselektiv reflektierende Schicht **106**, ohne reflektiert zu werden, ein weiteres Mal passiert hat, erfolgt eine abermalige Reflexion in der Viertelwellenplatte **94**, wodurch sich der Lichtstrahl **4** in seiner Polarisation um 90 Grad gedreht entlang der Linie **82** in Richtung der polarisationsselektiv reflektierenden Schicht **106** fortpflanzt, an dieser jetzt reflektiert wird, um sich entlang der Linie **74** sowie durch nochmalige Reflexion an der polarisationsselektiv reflektierenden Schicht **104** entlang der Linie **80** in Richtung der Viertelwellenplatte **90** fortzupflanzen. Die Reflexion des Lichtstrahls **4** in der Viertelwellenplatte **90** ergibt durch die gleichzeitige Drehung seiner Polarisation um 90 Grad den reflexionsfreien Durchgang durch die polarisationsselektiv reflektierenden Schicht **104** entlang der Linie **80** sowie der Linie **78**. Nach Reflexion in der Viertelwellenplatte **88** pflanzt sich der Lichtstrahl **4** entlang der Linie **78** in Richtung der polarisationsselektiv reflektierenden Schicht **104** fort, um an dieser auf der Linie **76** in Richtung der Viertelwellenplatte **86** reflektiert zu werden. Die Reflexion in der Viertelwellenplatte **86** bewirkt eine Drehung der Polarisation des Lichtstrahls **4** um weitere 90 Grad. Daher passiert der Lichtstrahl **4** anschliessend die polarisationsselektiv reflektierende Schicht **104** sowie die polarisationsselektiv reflektierende Schicht **106** reflexionsfrei entlang der Linie **76**, der Linie **74** sowie der Linie **72**, um nach Passieren der Linse **10** mittels des Faraday-Rotators **8** sowie des Polarisationsstrahlteilers **6** abgetrennt zu werden. In dieser Vorrichtung durchläuft der Lichtstrahl **4** insgesamt **18** optisch gepumpte Zonen. Diese addieren sich aus jeweils 4 Durchgängen durch die den 4 Viertelwellenplatten **86, 88, 90** und **94** vorgelagerten optisch gepumpten Zonen sowie aus 2 Durchgängen durch die dem Spiegel **92** vorgelagerte optisch gepumpte Zone.

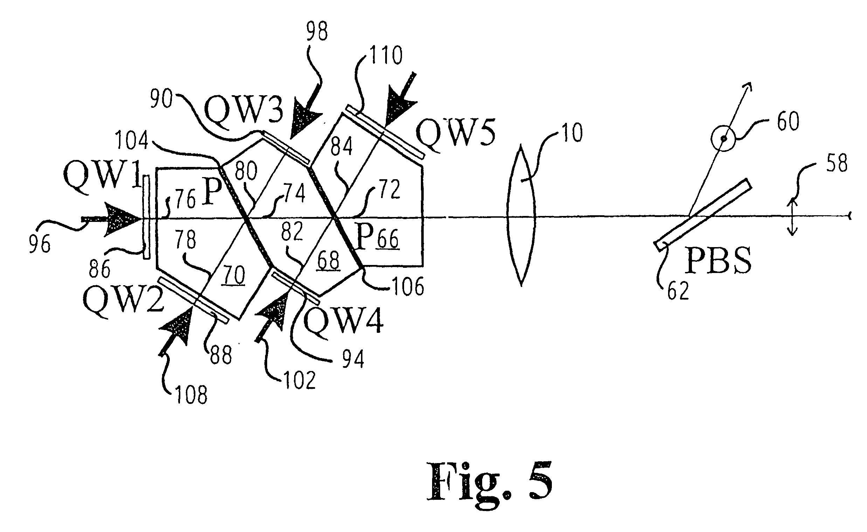

**Fig. 5** wiederum zeigt eine Ausführungsform der in **Fig. 4** in ihrer grundsätzlichen Wirkungsweise dargestellten Vorrichtung, welche den Verzicht auf den massereichen und voluminösen Faraday-Rotator **8** erlaubt.

Der Lichtstrahl **4** durchläuft nach dem Polarisationsstrahlteiler **62** sowie der Linse **10** in einer durch das Symbol **58** dargestellten Polarisation zunächst entlang der Linie **72**, der Linie **74** und der Linie **76** den Kristall **66**, den Kristall **68** sowie den Kristall **70**, ohne an der polarisationsselektiv reflektierenden Schicht **106** sowie der polarisationsselektiv reflektierenden Schicht **104** reflektiert zu werden. Nach Reflexion in der Viertelwellenplatte **86** pflanzt sich der Lichtstrahl **4** mit um 90 Grad gedrehter Polarisation in umgekehrter Richtung entlang der Linie **76** fort, um an der polarisationsselektiv reflektierenden Schicht **104** in Richtung der Linie **78** reflektiert zu werden. Nach Reflexion in der Viertelwellenplatte **88** pflanzt sich der Lichtstrahl **4** in umgekehrter Richtung mit wiederum um **90** Grad gedrehter Polarisation in Richtung der Linie **78** sowie der Linie **80** fort, wobei ein reflexionsfreier Übergang vom Kristall **70** in den Kristall **68** erfolgt. Nach Reflexion in der Viertelwellenplatte **90** pflanzt sich der Lichtstrahl **4** in umgekehrter Richtung mit um 90 Grad gedrehter Polarisation entlang der Linie **80** fort, um an der polarisationsselektiven Schicht **104** in den durch die Linie **74** bestimmten Ausbreitungspfad reflektiert zu werden. Anschliessend erfolgt eine weitere Reflexion an der polarisationsselektiv reflektierenden Schicht **106** in Richtung der Linie **82**, worauf der Lichtstrahl **4** in der Viertelwellenplatte **94** in die entgegengesetzte Richtung reflektiert und in seiner Polarisation wiederum um 90 Grad gedreht wird. Entlang der Linie **82** und der Linie **84** breitet sich der Lichtstrahl **4** dann in Richtung einer weiteren Viertelwellenplatte **110** aus, in welcher dieser in seiner Polarisation um 90 Grad gedreht in die entgegengesetzte Richtung entlang der Linie **84** reflektiert wird, um nun an der polarisationsselektiv reflektierenden Schicht **106** in Richtung der Linie **72** reflektiert zu werden. Nach Verlassen des Kristalls **66** passiert der Lichtstrahl **4** die Linse **10** und wird am Polarisationsstrahlteiler **62** in Richtung der Linie **30** reflektiert, da die Polarisation des Lichtstrahls **4** jetzt, dargestellt durch das Symbol **60**, orthogonal zu der des in den Kristall **66** eintretenden Lichtstrahls **4** ist. Insgesamt finden in der durch **Fig. 5** dargestellten Vorrichtung 10 Durchgänge des Lichtstrahls **4** durch optisch gepumpte Zonen der Kristalle **66, 68** sowie **70** statt. Diese addieren sich aus dem jeweils zweifachen Durchgang des Lichtstrahls **4** durch jeweils eine den Viertelwellenplatten **86, 88, 90, 94** sowie **110** vorgelagerte optisch gepumpte Zone, jeweils in beiden Richtungen und mit zueinander orthogonaler Polarisation.

Die in **Fig. 4** und **Fig. 5** dargestellten Vorrichtungen lassen sich durch Hinzufügen jeweils eines weiteren Kristalls **68**, einer weiteren polarisationsselektiv reflektierenden Schicht **104** sowie weiteren Viertelwellenplatten **90** und **94** und Pumplichtquellen **98** und **102** zu Verstärkern mit beliebigen Anzahlen von Durchgängen des Lichtstrahls **4** durch optisch gepumpte Zonen der Kristalle eines solchen quantenoptischen Verstärkers konfigurieren.

Sofern die in den vorangegangenen Ausführungsbeispielen benannten Kristalle **2, 32, 34, 66, 68** sowie **70**. deren Material prinzipiell beliebig ist, nicht aus optisch isotropem, sondern optisch einachsigem Material besteht, wie z. B. Neodym-Yttrium-Vanadat, muss die optische Achse solcher Kristalle senkrecht zur Ausbreitungsrichtung der zu verstärkenden Strahlen ausgerichtet sein. Sind die Kristalle derart geschnitten, kann nach dem Prinzip eines Glan-Foucault-Prismas die in den Anordnungen nach **Fig. 2 -6** erforderliche polarisationsselektive Reflexion von zu verstärkenden Strahlen auch durch einen einfachen, optisch isotropen Zwischenraum bewirkt werden. Durch verschiedenartige Ausrichtung der optischen Achsen angrenzender Kristalle kann zudem auch ein Glan-Taylor-Prisma realisiert werden.

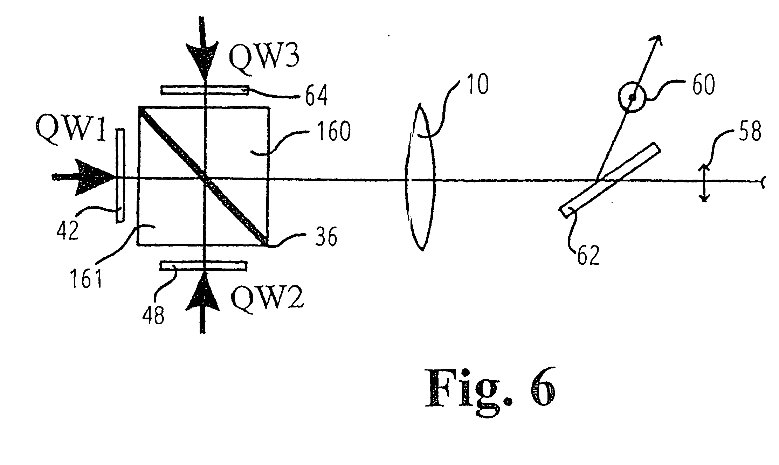

Die äussere Form der Kristalle **32, 34, 66, 68** sowie **70** in den **Fig. 2-5** ist nicht auf die hierin dargestellten Formen eingeschränkt. **Fig. 6** zeigt als Beispiel eine Abwandlung des Verstärkers nach **Fig. 3** in Form eines 45-Grad-Polarisationsstrahlteiler-Würfels. Wiederum kann in dieser Ausführungsform die polarisationsselektive Schicht **36** als optisch isotroper Zwischenraum nach Art eines Glan-Foucault-Prismas oder Glan-Taylor-Prismas ausgeführt sein, sofern optisch einachsige Kristalle zur Anwendung kommen. Weiterhin kann die Viertelwellenplatte **64** durch einen Spiegel ersetzt werden, um zu einer der in **Fig. 2** dargestellten Ausführungsform analogen Struktur zu gelangen. Durch Aneinanderreihung von aus Kristallen **160** und **161** bestehenden Würfeln sind zudem zu in den **Fig. 4** und **5** analoge Strukturen realisierbar.

## Patentansprüche

1. Vorrichtung, die zur quantenoptischen Verstärkung modulierten, linear polarisierten Lichts (**4**) geeignet ist, mit
- einem Polarisationsstrahlteiler (**6**), der von dem zu verstärkenden modulierten, linear polarisierten Lichts (**4**) durchstrahlt wird,
- zwei Kristallen (**32, 34; 66, 68, 70; 160, 161**), wobei einer der Kristalle (**32; 66**) eine Fläche zur Einstrahlung und zum Auskoppeln des zu verstärkenden modulierten, linear polarisierten Lichts (**4**) aufweist,
- zwei Viertelwellenplatten (42, 48; 86, 88, 90, 94) zur Reflektion und Drehung des in den Kristallen (**32, 34; 66, 68, 70; 160, 161**) verstärkten, modulierten, linear polarisierten Lichts,
- einem Spiegel (**54; 92**) zur Reflektion des in Kristallen (**32, 34; 66, 68, 70; 160, 161**) verstärkten und gedrehten modulierten, linear polarisierten Lichts,
- sowie einer polarisationsselektiv reflektierenden Schicht (**36; 104, 106**), wobei die polarisationsselektiv reflektierende Schicht (**36; 104, 106**) einen unmittelbaren Übergang zwischen den beiden Kristallen (**32,34; 66, 68, 70; 160, 161**) darstellt, und wobei durch die Viertelwellenplatten (**42, 48; 86, 88, 90, 94**) und den Spiegel (**54; 92**) hindurch Pumplicht (**QW1, QW2, QW3, QW4, M**) in das jeweilige Kristall (**32, 34; 66, 68, 70; 160, 161**) geführt wird und das zu verstärkende modulierte, linear polarisierte Licht in den Kristallen (**32, 34; 66, 68, 70; 160, 161**) Mehrfachreflektionen erfährt.

2. Vorrichtung nach Anspruch **1**,
**dadurch gekennzeichnet, dass**
der Spiegel (**54; 92**) durch eine weitere Viertelwellenplatte (**64; 110**) ersetzt ist.

3. Vorrichtung nach Anspruch **1** oder **2**,
**dadurch gekennzeichnet, dass**
zwischen zwei Kristallen (**66, 70**) ein weiteres Kristall (**68**) mit daran angebrachten Viertelwellenplatten (**90, 94**) eingefügt ist, wobei beide sich ergebenden Übergänge zu den beiden Kristallen (**66, 70**) durch polarisationsselektiv reflektierende Schichten (**104, 106**) erfolgen.

4. Vorrichtung nach Anspruch **3**,
**dadurch gekennzeichnet, dass**
zwischen den beiden Kristallen (**66, 70**) neben dem Kristall (**68**) weitere gleichartige Kristalle gelagert sind, welche ebenfalls durch polarisationsselektiv reflektierende Schichten (**104, 106**) voneinander abgegrenzt sind.

5. Vorrichtung nach einem der vorangehenden Ansprüche,
**dadurch gekennzeichnet, dass**
optisch einachsige Kristalle vorgesehen sind, die derart geschnitten sind, dass ihre optische Achse senkrecht oder parallel zum Feld aller zu verstärkenden Strahlen steht.

6. Vorrichtung nach einem der vorangehenden Ansprüche,
**dadurch gekennzeichnet, dass**
eine polarisationsselektive Strahltrennung an einer Schicht (**36**) in Zusammenwirken mit optisch einachsigen Kristallen (**32, 34; 160, 161**) nach Art eines Glan-Foucault-Prismas oder eines Glan-Taylor-Prismas erfolgt.

7. Vorrichtung nach einem der vorangehenden Ansprüche,
**dadurch gekennzeichnet, dass**
ein quantenoptischer Verstärker aus Kristallen (**160, 161**) besteht, welche zusammengesetzt würfelförmige Elemente ergeben.

8. Verwendung einer Vorrichtung gemäss einem der Ansprüche **1** bis **7** in einem optischen Freiraumkommunikationssystem.

## Claims

1. Device suitable for the quantum-optical amplification of modulated, linear-polarized light (**4**), with
- a polarization beam splitter (**6**) through which passes the beam of modulated, linear-polarized light (**4**) to be amplified,
- two crystals (**32, 34; 66, 68, 70; 160, 161**), of which one crystal (**32, 66**) displays a surface for the entry and decoupling of the beam of modulated, linear-polarized light (**4**) to be amplified,
- two quarter-wave plates (**42, 48; 86, 88, 90, 94**) to reflect and rotate the modulated and linear-polarized light amplified in the crystals (**32, 34; 66, 68, 70; 160, 161**),
- a mirror (**54; 92**) to reflect the modulated and linear-polarized light amplified and rotated in the crystals (**32, 34; 66, 68, 70; 160, 161**),
- and a polarization-selective reflective layer (**36, 104, 106**), the polarization-selective reflective layer (**36, 104, 106**) representing a direct passageway between the two crystals (**32, 34; 66, 68, 70; 160, 161**) by means of which pump light (**QW1, QW2, QW3, QW4, M**) is led through the quarter-wave plates (**42, 48; 86, 88, 90, 94**) and the mirror (**54, 92**) into the corresponding crystal (**32, 34; 66, 68, 70; 160, 161**) and the modulated, linear-polarized light to be amplified undergoes multiple reflections in the crystals (**32, 34; 66, 68, 70; 160, 161**).

2. Device according to Claim 1,
**characterized in that**
the mirror (**54, 92**) is replaced by an additional quarter wave plate (**64; 110**).

3. Device according to Claim 1 or 2,
**characterized in that**
between two crystals (**66, 70**), a further crystal (**68**) is interposed, with added quarter wave plates (**90, 94**), so that both the resulting passages to the two crystals (**66, 70**) occur through polarization-selective reflective layers (**104, 106**).

4. Device according to Claim 3,
**characterized in that**
between the two crystals (**66, 70**), next to the crystal (**68**), more similar crystals are positioned, also separated from each other by polarization-selective reflective layers (**104, 106**).

5. Device according to one of the foregoing Claims,
**characterized in that**
crystals having a single optical axis are provided, cut so that their optical axis is oriented normal or parallel to the field of the beams to be amplified.

6. Device according to one of the foregoing Claims,
**characterized in that**
polarization-selective splitting of the beam at a reflective layer (**36**) in conjunction with crystals (**32, 34; 160, 161**) having a single optical axis occurs in the manner of a Glan-Foucault prism or a Glan-Taylor prism.

7. Device according to one of the foregoing Claims,
**characterized in that**
a quantum-optical amplifier consists of crystals (**160, 161**) put together to form dice-shaped elements.

8. Application of a device according to one of Claims **1** to **7** in an optical free-space communications system.

## Revendications

1. Dispositif adapté à l'amplification optique d'une lumière modulée, polarisée linéairement (**4**), comprenant
- un séparateur de faisceaux à polarisation (**6**) qui est traversé par la lumière à amplifier, modulée et polarisée linéairement (**4**),
- deux cristaux (**32, 34 ; 66, 68, 70 ; 160, 161**), l'un des cristaux (**32 ; 66**) présentant une surface pour l'entrée et pour la sortie de la lumière à amplifier, modulée et polarisée linéairement **(4),**
- deux lames quart d'ondes (**42, 48 ; 86, 88, 90, 94**) pour la réflexion et la rotation de la lumière amplifiée, modulée et polarisée linéairement dans les cristaux (**32, 34 ; 66, 68, 70 ; 160, 161**),
- un miroir (**54, 92**) pour réfléchir la lumière amplifiée, effectuant des rotations, modulée et polarisée linéairement dans les cristaux (**32, 34 ; 66, 68, 70 ; 160, 161**)
- et avec une couche réfléchissante sensible à la polarisation (**36, 104, 106**), la couche réfléchissante sensible à la polarisation (**36, 104, 106**) présentant un passage immédiat entre les deux cristaux (**32, 34 ; 66, 68, 70 ; 160, 161**), une lumière de pompage (**QW1, QW2, QW3, QW4, M**) étant envoyée dans le cristal respectif (**32, 34 ; 66, 68, 70 ; 160, 161**) à travers les lames quart d'ondes (**42, 48 ; 86, 88, 90, 94**) et le miroir (**54, 92**) et la lumière à amplifier, modulée et polarisée linéairement subissant plusieurs réflexions dans les cristaux (**32, 34 ; 66, 68, 70 ; 160, 161**).

2. Dispositif selon la revendication **1**,
**caractérisé en ce que**
le miroir (**54, 92**) est remplacé par une autre lame quart d'ondes (**64, 110**).

3. Dispositif selon la revendication **1** ou **2**,
**caractérisé en ce que**
un autre cristal (**68**), avec des lames quart d'ondes y étant apposées (**90, 94**) est inséré entre les deux cristaux (**66, 70**), les transitions avec les deux cristaux (**66, 70**) qui en découlent se faisant à travers des couches réfléchissantes sensibles à la polarisation (**104, 106**).

4. Dispositif selon la revendication **3**,
**caractérisé en ce que**
d'autres cristaux similaires, également séparés entre eux par des couches réfléchissantes sensibles à la polarisation (**104, 106**), sont logés entre les deux cristaux (**66, 70**) et à côté du cristal (**68**).

5. Dispositif selon l'une des revendications précédentes,
**caractérisé en ce que**
des cristaux optiquement uniaxes sont conçus, taillés de manière à ce que leur axe optique soit perpendiculaire ou parallèle au champ de tous les faisceaux à amplifier.

6. Dispositif selon l'une des revendications précédentes,
**caractérisé en ce que**
une séparation du faisceau selon la polarisation intervient au niveau d'une couche (**36**), en conjonction avec des cristaux optiquement uniaxes (**32, 34 ; 160, 161**), à la manière d'un prisme de Glan-Foucault ou d'un prisme de Glan-Taylor.

7. Dispositif selon l'une des revendications précédentes,
**caractérisé en ce que**
un amplificateur optique est composé de cristaux (**160, 161**) formant des éléments en forme de dés lorsqu'ils sont assemblés.

8. Utilisation d'un dispositif conformément à l'une des revendications **1** à **7** dans un système optique de communication dans l'espace libre.
